(19) Europäisches Patentamt / European Patent Office / Office européen des brevets

(11) **EP 4 571 062 A1**

(12) **EUROPEAN PATENT APPLICATION**
published in accordance with Art. 153(4) EPC

(43) Date of publication:
**18.06.2025 Bulletin 2025/25**

(21) Application number: 23862804.4

(22) Date of filing: **20.07.2023**

(51) International Patent Classification (IPC):
*F01N 3/022* [(2006.01)]   *B01D 39/20* [(2006.01)]
*B01D 53/94* [(2006.01)]   *B01J 35/56* [(2024.01)]
*B01J 35/60* [(2024.01)]   *F01N 3/035* [(2006.01)]

(52) Cooperative Patent Classification (CPC):
**B01D 39/20; B01D 53/94; B01J 35/57; B01J 35/60;
F01N 3/022; F01N 3/035**

(86) International application number:
**PCT/JP2023/026603**

(87) International publication number:
**WO 2024/053260 (14.03.2024 Gazette 2024/11)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **06.09.2022 JP 2022141708**

(71) Applicant: **CATALER CORPORATION
Kakegawa-shi, Shizuoka 437-1492 (JP)**

(72) Inventors:
• **TASAKI, Ryo
Kakegawa-shi, Shizuoka 437-1492 (JP)**
• **YABUZAKI, Yuji
Kakegawa-shi, Shizuoka 437-1492 (JP)**

(74) Representative: **Kramer Barske Schmidtchen
Patentanwälte PartG mbB
European Patent Attorneys
Landsberger Strasse 300
80687 München (DE)**

(54) **PARTICULATE FILTER**

(57) The present disclosure provides a particulate filter capable of having both the PM capturing performance and the pressure drop suppression function at a high level. The particulate filter 1 disclosed herein captures a particulate matter PM contained in exhaust gas. The particulate filter 1 includes: a base material 10 including inlet cells 12 each with an opening at an exhaust gas inlet end 12a, outlet cells 14 each with an opening at an exhaust gas outlet end 14b, and porous partitions 16 partitioning both the inlet cells 12 and the outlet cells 14; and an outercoat layer 20 provided on an inlet surface 16a of each of the partitions 16. The $D_{90}$ pore diameter of pores 22 in the outercoat layer 20 is from 1 $\mu$m to 10 $\mu$m inclusive. In the outercoat layer 20, a thickness t1 of pores 22 is from 20 $\mu$m to 80 $\mu$m inclusive, and a porosity $P_{coat}$ of the pores 22 is from 30% to 70% inclusive. According to the outercoat layer 20 with such a configuration, the particulate matter PM can be suitably captured with appropriate control of pressure drop increase.

FIG.4

**Description**

Technical Field

The technology disclosed herein relates to a particulate filter. The present application is based upon and claims the benefit of priority from Japanese patent application No. 2022-141708 filed on September 6, 2022, and the entire disclosure of which is incorporated herein its entirety by reference.

Background Art

The exhaust gas exhausted from the internal combustion engine such as an automobile engine contains a particulate matter (PM) in addition to hazardous gas components such as hydrocarbon (HC), carbon monoxide (CO), and nitrogen oxide ($NO_x$). There are concerns about the influence of the particulate matter as well as the hazardous gas components, on the human body and environment. Thus, a particulate filter which can remove the particulate matter is disposed in an exhaust system of the internal combustion engine.

Such a particulate filter includes, for example, a wall-flow type base material. The wall-flow type base material includes: inlet cells each with an opening only at an exhaust gas inlet end; outlet cells each with an opening only at an exhaust gas outlet end, and porous partitions partitioning both cells. Exhaust gas supplied to the wall-flow type base material flows into the inlet cells, passes through the partitions, and then exhausted from the outlet cells. At this time, the particulate matter in the exhaust gas is captured on the partitions.

In this kind of particulate filter, a coat layer may be formed on each of the partitions of the base material. This can further improve the PM capturing performance. For example, in the filter described in Patent Literature 1, a wash coat layer (outercoat layer) covering the surface of the partition is formed. Multiple pores through which exhaust gas can pass are formed in the outercoat layer. When the exhaust gas passes through the pores, the particulate matter in the exhaust gas is captured on the outercoat layer. For example, in the outercoat layer of Patent Literature 1, pores having an average interparticle pore size (average pore diameter) of 5.0 nm to 5.0 $\mu$m are formed.

Citation List

Patent Literature

Patent Literature 1: Japanese Patent Publication of International Application No. 2012-518753

Summary of Invention

Technical Problem

In recent years, in response to the increasing environmental concerns, there has been a demand for a particulate filter having more excellent PM capturing performance. However, decreasing the average pore diameter of the outercoat layer to improve the PM capturing performance may result in increased pressure drop due to reduced gas passing rate. In other words, it has been difficult for known particulate filters to achieve both the PM capturing performance and the pressure drop suppression performance at a high level.

The technology disclosed herein was made in view of the circumstances, and main objective is to provide a particulate filter capable of having both the PM capturing performance and the pressure drop suppression function at a high level.

Solution to Problem

In order to achieve the objective, the present disclosure provides a particulate filter with the following configuration.

A particulate filter (1) disclosed herein captures a particulate matter in exhaust gas exhausted from an internal combustion engine. The particulate filter includes: a wall-flow type base material having an inlet cell with an opening only at an exhaust gas inlet end, an outlet cell with an opening only at an exhaust gas outlet end, and a porous partition partitioning the inlet cell and the outlet cell; and an outercoat layer that is a porous layer formed by multiple granules and is formed on a surface of the partition in contact with the inlet cell. In the particulate filter disclosed herein, a $D_{90}$ pore diameter of pores in the outercoat layer in a volume-based pore distribution measured by a mercury porosimetry is from 1 $\mu$m to 10 $\mu$m inclusive. In a cross-sectional SEM observation, the outercoat layer has a thickness from 20 $\mu$m to 80 $\mu$m inclusive, and a porosity from 30% to 70% inclusive.

As in the Patent Literature 1, the size of the pores in the outercoat layer is generally defined by the average pore diameter or $D_{50}$ pore diameter. However, among multiple pores formed in the outercoat layer, the pores (large pores) with large pore diameters have low exhaust gas permeation resistance, thereby having a greater gas flow rate than that for the other pores. For this reason, in large pores, the amount of particulate matter that passes through the outercoat layer without coming into contact with the wall surfaces of the pores increases greatly. Therefore, limiting the pore diameter ($D_{90}$ pore diameter) of the larger pores to a certain value or less makes it possible to particularly suitably prevent PM from passing through the outercoat layer. In light of this fact, in the particulate filter with this configuration, the $D_{90}$ pore diameter of pores in the outercoat layer is limited to 10 $\mu$m or less. Although not as significant as the average pore diameter and the $D_{50}$ pore diameter, a smaller $D_{90}$ pore diameter of the outercoat layer tends to cause a higher pressure drop during PM deposition. Thus, in the particulate filter with this configuration, the $D_{90}$ pore diameter of pores in the outercoat layer is set to be 1 $\mu$m or more.

Next, increasing the passing distance of particulate matter within the outercoat layer increases the opportunity for the particulate matter to come into contact with the wall surfaces of the pores. This facilitates capturing of the particulate matter inside the outercoat layer. In light of this fact, in the particulate filter with this configuration, the thickness of the outercoat layer is determined to be 20 $\mu$m or more. On the other hand, if the outercoat layer becomes too thick, the air permeability of the outercoat layer may decrease. Thus, in the particulate filter with such a configuration, the thickness of the outercoat layer is determined to be 80 $\mu$m or less.

If the porosity of the outercoat layer becomes too low, the pores of the outercoat layer are easily blocked by the deposition of the particulate matter. In addition, in the outercoat layer having a low porosity (the number of pores formed is small), the effective area of the wall surfaces of the pores is small, resulting in lower PM capturing performance. If the porosity of the outercoat layer becomes too low, the linear velocity of the exhaust gas passing through the pores increases, thereby increasing the possibility that the particulate matter passes through the outercoat layer. In view of these facts, in the particulate filter with this configuration, the porosity of the outercoat layer is determined to be 30% or more. On the other hand, if the porosity is too high, the mechanical strength of the outercoat layer decreases, which may result in damage or peeling off due to the inflow of the exhaust gas. Thus, in the particulate filter with such a configuration, the porosity of the outercoat layer is determined to be 70% or less.

As described above, according to the particulate filter disclosed herein, the PM capturing performance and the pressure drop suppression function can be both achieved at high level.

A particulate filter (2) disclosed herein is configured such that in the particulate filter (1), a flow path length of the pores of the outercoat layer is 200 $\mu$m or more, in a 100 $\mu$m measurement region along an extending direction. This allows further improvement in the PM capturing performance inside the outercoat layer.

A particulate filter (3) disclosed herein is configured such that in the particulate filter (1) or (2), a $D_{50}$ pore diameter of the outercoat layer in the volume-based pore distribution measured by the mercury porosimetry is from 0.8 $\mu$m to 3 $\mu$m inclusive. This allows the PM capturing performance and the pressure drop suppression performance to be both achieved at a high level.

A particulate filter (4) disclosed herein is configured such that in any one of the particulate filters (1) to (3), when a $D_{50}$ pore diameter of the granules in the outercoat layer in a number-based particle size distribution measured by a laser diffraction light scattering method is X, and a $D_{50}$ pore diameter of voids in the partition in a volume-based pore diameter distribution measured by the mercury porosimetry is Y, the particulate filter satisfies the following formula (1). This allows the outercoat to be easily formed on the inlet surface of the partition.

$$0.1 \leq X/Y \leq 3 \quad (1)$$

A particulate filter (5) disclosed herein is configured such that in any of the particulate filters (1) to (4), the granules contain at least one selected from the group consisting of alumina, ceria, zirconia, silica, magnesia, and calcia. This allows improvement in the heat resistance of the outercoat layer.

A particulate filter (6) disclosed herein is configured such that in any of the particulate filters (1) to (5), the granules contain a noble metal catalyst for purifying a hazardous gas component in exhaust gas. This allows a particulate filter having a purifying performance for hazardous gas components such as $NO_X$ to be achieved.

A particulate filter (7) disclosed herein is configured such that any of the particulate filters (1) to (6) further includes an inner coat layer that is formed on wall surfaces of voids in a region extending from a surface of the partition in contact with the outlet cell to the inlet cell and that contains a noble metal catalyst for purifying the hazardous gas component in the exhaust gas. This allows a particulate filter having an excellent gas purifying performance to be achieved.

A particulate filter (8) disclosed herein is configured such that the particulate filter (7) is provided with an uncoated region in which a coat layer is substantially not present, between the outercoat layer and the inner coat layer in a thickness direction of the partition. This allows the gas purifying performance and the pressure drop suppression performance to be both achieved at a high level.

A particulate filter (9) disclosed herein is configured such that in the particulate filter (8), a length of the uncoated region in the thickness direction of the partition is 10 $\mu$m or more. This allows the gas purifying performance and the pressure drop suppression performance to be both achieved at a further high level.

A particulate filter (10) disclosed herein is configured such that in any of the particulate filters (1) to (9), the internal combustion engine is a gasoline engine. Exhaust gas generated in the gasoline engine has a higher temperature than exhaust gas exhausted from other engines (such as a diesel engine), and thus, the gasoline engine can easily combust the particulate matter captured on the outercoat layer and the partition. In light of this fact, the particulate filter disclosed herein can be used particularly suitably as a gasoline particulate filter (GPF).

BRIEF DESCRIPTION OF DRAWINGS

[Fig. 1] Fig. 1 schematically illustrates an exhaust system in which a particulate filter is disposed.
[Fig. 2] Fig. 2 is a schematic perspective view of a particulate filter according to a first embodiment.
[Fig. 3] Fig. 3 is a schematic sectional view of a particulate filter according to the first embodiment along an axial direction.
[Fig. 4] Fig. 4 is a schematically enlarged sectional view of a partition of the particulate filter according to the first embodiment.
[Fig. 5] Fig. 5 is a graph showing pore diameter distributions of a coat layer released sample A and a coat layer remaining sample B measured by mercury porosimetry.
[Fig. 6] Fig. 6 is a schematic sectional view of a particulate filter according to a second embodiment along an axis direction.
[Fig. 7] Fig. 7 is a schematically enlarged sectional view of a partition of the particulate filter according to the second embodiment.

DESCRIPTION OF EMBODIMENTS

The following describes suitable embodiments of the technology disclosed herein based on the drawings. The matters necessary for executing the technology disclosed herein, except for matters specifically herein referred to (e.g., the detailed structure of the exhaust path) can be grasped as design matters of those skilled in the art based on the related art in the preset field. The technology disclosed herein can be executed based on the contents disclosed herein and the technical knowledge in the present field. The expression "A to B" indicating herein a numerical range means "from A to B inclusive" and encompasses "exceed A and less than B."

[Exhaust System of Internal Combustion Engine]

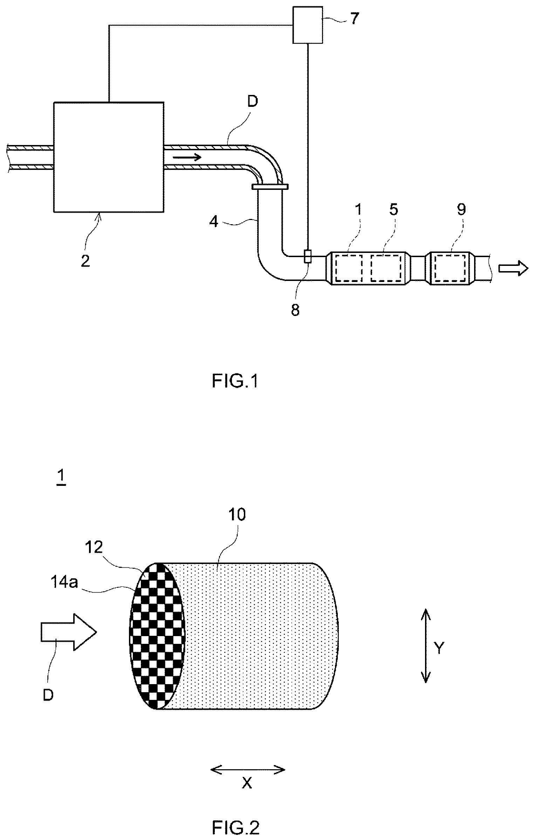

Applications of the particulate filter disclosed herein will be described below. Fig. 1 schematically illustrates an exhaust system in which a particulate filter is disposed.

The reference sign 2 in Fig. 1 indicates an internal combustion engine. The internal combustion engine 2 combusts the air-fuel mixture containing oxygen and fuel gas to generate kinetic energy. Exhaust gas produced by the combustion of the air-fuel mixture contains hazardous gas components (e.g., HC, CO, NO$_X$) and a particulate matter. The exhaust gas is exhausted to the exhaust system including an exhaust manifold 3 and an exhaust pipe 4. In this specification, the direction of the gas flow exhausted from the internal combustion engine 2 is referred to as an "exhaust gas flow direction D." The side close to the internal combustion engine 2 in the exhaust gas flow direction D is referred to as "upstream" and the side farther from the internal combustion engine 2 is referred to as "downstream."

A sensor 8 is attached to the exhaust pipe 4. The sensor 8 senses information about components and temperature of the exhaust gas. The sensor 8 is connected to an engine control unit (ECU) 7. The information sensed by the sensor 8 is transmitted to the ECU 7. When controlling operation of the internal combustion engine 2, the ECU 7 refers to sensing results from the sensor 8 as appropriate.

In the exhaust system (exhaust pipe 4 in Fig. 1) of the internal combustion engine 2, a particulate filter 1, an exhaust gas purification catalyst 5, and an underfloor catalyst 9 are disposed. The exhaust gas purification catalyst 5 and the underfloor catalyst 9 purify hazardous gas components in the exhaust gas. The detailed structures of the exhaust gas purification catalyst 5 and the underfloor catalyst 9 are not features of the technology disclosed herein, and thus, the detailed description thereof is omitted.

A particulate filter 1 captures a particulate matter in the exhaust gas exhausted from an internal combustion engine 2. The detailed structure of the particulate filter 1 will be described later. The particulate filter disclosed herein is applicable to various kinds of internal combustion engines. In other words, the particulate filter may be a gasoline particulate filter (GPF) targeted for exhaust gas exhausted from the gasoline engine, or a diesel particulate filter (DPF) targeted for exhaust gas exhausted from the diesel engine. Exhaust gas exhausted from the gasoline engine has a temperature higher than exhaust gas exhausted from other types of internal combustion engines. The particulate filter captured inside the particulate filter thus can be easily combusted. The particulate filter disclosed herein has an excellent PM capturing performance and thus is suitably applicable particularly to GPF which can easily remove the particulate matter after capturing.

The particulate filter 1 shown in Fig. 1 is disposed upstream of the exhaust gas purification catalyst 5 and the underfloor catalyst 9. The position of the particulate filter 1 to be disposed in the exhaust system does not limit the technology disclosed herein. For example, the particulate filter may be disposed between the exhaust gas purification catalyst and the underfloor catalyst.

[First Embodiment]

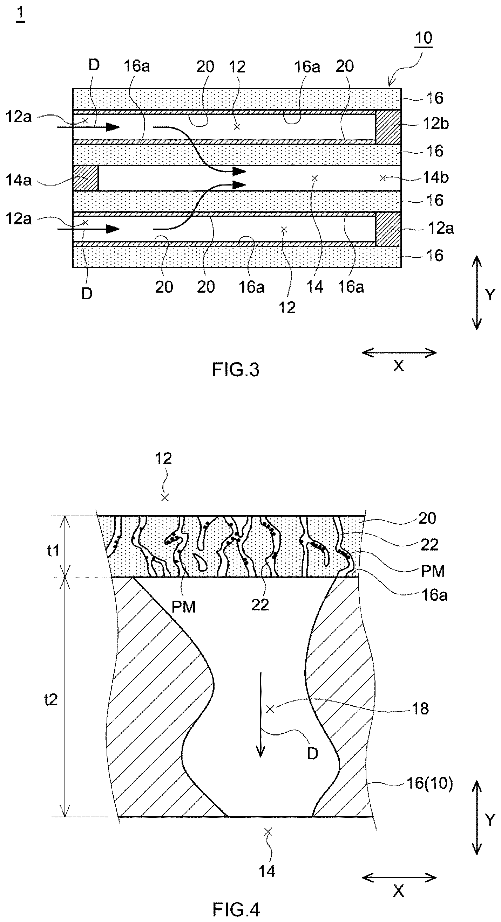

A first embodiment of the particulate filter disclosed herein will be described below. Fig. 2 is a schematic perspective view of the particulate filter according to the first embodiment. Fig. 3 is a schematic sectional view of the particulate filter according to the first embodiment along an axis direction. Fig. 4 is a schematic enlarged sectional view of a partition of the particulate filter according to the first embodiment. The reference sign X in each of the drawings indicates the "extending direction of the partition," and the reference sign Y indicates the "thickness direction of the partition."

A. Structure of Particulate Filter

As shown in Figs. 2 to 4, the particulate filter 1 according to the present embodiment includes a base material 10 and an outercoat layer 20. Each component will be described below.

1. Base Material

The base material 10 is a member to be a framework of the particulate filter 1. The base material 10 shown in Fig. 2 is a cylindrical member extending along the exhaust gas flow direction D. The outside shape of the base material is not limited to cylindrical, and may be elliptic cylindrical, polygonal, or the like. The overall length and capacity of the base material 10 are also not particularly limited, and can be changed, as appropriate, according to the performance of the internal combustion engine 2, a length of the exhaust pipe 4, and the like. As the base material 10, known materials can be used without particular limitations. For example, as the base material 10, a highly heat-resistant material such as ceramics or alloy can be used. Examples of the highly heat-resistant ceramics include cordierite, silicon carbide (SiC), and aluminum titanate. Examples of the highly heat-resistant alloy include stainless steel. Among the materials, cordierite has excellent durability against thermal shock, and thus can be suitably used as a base material 10 for GPF, to which high-temperature exhaust gas is prone to be supplied.

The base material 10 of the present embodiment is a wall-flow type base material. As shown in Figs. 3, the wall-flow type base material 10 includes: inlet cells 12 each with an opening at an exhaust gas inlet end 12a; outlet cells 14 each with an opening at an exhaust gas outlet end 14b, and porous partitions 16 partitioning both the inlet cells 12 and the outlet cells 14. The exhaust gas outlet end of the inlet cells 12 is closed with a sealing portion 12b. The exhaust gas inlet end of the outlet cells 14 is closed with a sealing portion 14a. The inlet cells 12 and the outlet cells 14 are formed alternately so that they are adjacent to each other across the partitions 16. As shown in Fig. 2, the shape of each of the inlet cells 12 and the outlet cells 14 is square in a front view (view along the extending direction X of the partition 16). However, as the shape of each of the inlet cells and the outlet cells in a front view, various geometric shapes including rectangular such as a parallelogram, a rectangle, and a trapezoid, other polygonal shapes (e.g., a hexagon, an octagon), and circular shapes can be employed without particular limitations.

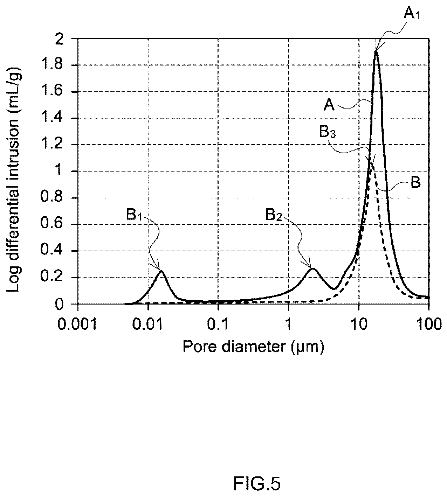

Multiple voids 18 are formed in the partition 16, which is a porous member (see Fig. 4). The inlet cells 12 and the outlet cells 14 communicate with each other via the voids 18. The $D_{50}$ pore diameter of the voids 18 in the partition 16 is preferably 5 $\mu$m or more, more preferably 10 $\mu$m or more. This ensures the air permeability of the partition 16 and suppresses the increase in pressure loss. The upper limit of the $D_{50}$ pore diameter of the voids 18 is preferably 100 $\mu$m or less, more preferably 50 $\mu$m or less, yet more preferably 40 $\mu$m or less, particularly preferably 30 $\mu$m or less. This allows improvement in PM capturing performance in the partition 16. In addition, as the $D_{50}$ pore diameter of the voids 18 becomes smaller, the outercoat layer 20 to be described later tends to be formed easily. The porosity of the partition 16 is preferably 30% or more, more preferably 40% or more, particularly preferably 50% or more. This allows suppression of the increase in pressure drop of the particulate filter 1. The upper limit of the porosity of the partition 16 is preferably 90% or less, more preferably 80% or less, yet more preferably 70% or less. This ensures sufficient mechanical strength of the base material 10. The $D_{50}$ pore diameter of the voids 18 and the porosity of the partition 16 can be measured by the pore diameter distribution (see A in Fig. 5) of a coat layer released sample.

The thickness t2 of the partition 16 is preferably 0.01 mm or more, more preferably 0.05 or more, particularly preferably 0.1 mm or more. This ensures sufficient mechanical strength of the base material 10. The thickness t2 of the partition 16 is preferably 2 mm or less, more preferably 1 mm or less. This ensures the permeability of the partition 16 and suppresses the increase in pressure loss.

2. Outercoat Layer

The outercoat layer 20 is a porous layer made of multiple granules. As shown in Fig. 3, the outercoat layer 20 is formed on the surface (inlet surface 16a) in contact with the inlet cells 12 of the partition 16. As shown in Fig. 4, the outercoat layer 20 covers inlets (end surface in contact with the inlet cells 12) of voids 18 in the partition 16. "Being formed on the inlet surface 16a" herein means that a certain area or more of the outercoat layer 20 is adhered to the inlet surface 16a of the partition 16, and does not prohibit part of the outercoat layer 20 from entering the inside of the partition 16 (into the voids 18). Typically, in analysis based on the cross-sectional SEM image to be described later, when 20% or more (typically 30% or more, for example, 40% or more) of the outercoat layer 20 is adhered to the inlet surface 16a of the partition 16, it can be said that "the outercoat layer 20 is formed on the inlet surface 16a of the partition 16." If a large amount of the outercoat layer 20 enters the partition 16, an increase in pressure drop due to blocking of the voids 18 is likely to occur. Thus, the percentage of the outercoat layer 20 adhered to the inlet surface 16a of the partition 16 is preferably 80% or more, more preferably 82% or more, yet more preferably 86% or more, particularly preferably 90% or more with respect to the entire outercoat layer 20.

(1) Material of Outercoat Layer

Next, granules forming the outercoat layer 20 will be described. The granules in the outercoat layer 20 preferably contain, as a main component, a heat resistant material defined in JIS R 2001. Examples of the heat resistant material include alumina ($Al_2O_3$), ceria ($CeO_2$), zirconia ($ZrO_2$), silica ($SiO_2$), magnesia (MgO), and calcia (CaO). Among the heat resistant materials, alumina, ceria, and zirconia are more preferable. "Containing as a main component" means containing the heat resistant material in 50 mass% or more (suitably 60 mass% or more, more suitably 70 mass% or more, particularly suitably 80 mass%) relative to the total weight of the outercoat layer 20 with respect to 100 wt% of the total amount of the outercoat layer 20. This can avoid sintering of the outercoat layer 20 due to high-temperature exhaust ga. As a result, air permeability of the outercoat layer 20 can be maintained at a high level.

The granules of the outercoat layer 20 may contain a noble metal catalyst. This allows a purification function for hazardous gas components (HC, CO, $NO_x$) to be imparted to the particulate filter 1. The noble metal catalyst further has a function of promoting combustion of the particulate matter PM, which contributes to suppression of pressure drop increase. As for the type of the noble metal catalyst, known materials can be used without particular limitations. Specific examples of the noble metal catalyst include gold (Au), silver (Ag), palladium (Pd), platinum (Pt), rhodium (Rh), and ruthenium (Ru). The total amount of the noble metal catalyst in the particulate filter 1 is preferably 0.1 g/L or more, more preferably 0.5 g/L or more, particularly preferably 1.0 g/L or morewith respect to the volumetric capacity of the base material 10. This allows for the purification function for a hazardous gas component to be suitably exhibited. In view of the material cost, the total amount of the noble metal catalyst is preferably 10 g/L or less, more preferably 8 g/L or less, particularly preferably 7 g/L or less.

When the granules containing the noble metal catalyst is used, the outercoat layer 20 preferably contains an additive which enhances catalytic activity of the noble metal catalyst. The additive can be, for example, an OSC material. The OSC material has an oxygen storage capacity (OSC) of occluding and releasing oxygen. This allows the exhaust gas to be maintained near stoichiometric (theoretical air-to-fuel ratio) and the catalysis of the noble metal catalyst to be stabilized. The OSC material can be, for example, a ceria-zirconia composite oxide (ZC composite oxide).

The outercoat layer 20 may further contain a known additive which may be added to the particulate filter layer in addition to the OSC material. Examples of the additive include $NH_3$ adsorbent (such as zeolite), $NO_x$ adsorbent, and a stabilizing agent. The outercoat layer 20 may further contain trace amounts of components derived from raw materials and manufacturing processes. For example, the outercoat layer 20 may contain one or more compounds (such as oxides, sulfates, carbonates, nitrates, and chlorides) of alkali earth metals (such as Be, Mg, Ca, and Ba), rare-earth metals (such as Y, La, and Ce), alkali metals (such as Li, Na, and K), and transition metals (such as Mn, Fe, Co, and Ni).

The $D_{50}$ particle diameter of granules forming the outercoat layer 20 is preferably 2 $\mu$m or more, more preferably 3 $\mu$m or more, yet more preferably 4 $\mu$m or more, particularly preferably 5 $\mu$m or more. This can keep the granules from entering the voids 18 of the partition 16, and ensure air permeability of the partition 16. If the $D_{50}$ particle diameter of the granules is too large, the number of contact points between the outercoat layer 20 (granules) and the partition 16 becomes small, and the outercoat layer 20 is easily peeled off. In light of this fact, the $D_{50}$ particle diameter of the granules is preferably 30 $\mu$m or less, more preferably 25 $\mu$m or less, yet more preferably 20 $\mu$m or less, particularly preferably 15 $\mu$m or less.

The "$D_{50}$ particle diameter of granules" herein is measured by laser diffraction scattering. Specifically, the powder of the outercoat layer 20 is separated from the surface of the partition by scraping with a brush or other means. The powder of the outercoat layer 20 is fed into a laser diffraction scattering particle size distribution measuring apparatus (LA-960 available from HORIBA). The powder is then dispersed in pure water inside the measurement apparatus, and the number-based particle size distribution of particles forming the outercoat layer is obtained based on the scattering light of the ultrasonically separated suspension. Then, in the particle size distribution, the particle diameter at the cumulative 50% from the smallest particle diameter is regarded as the "$D_{50}$ particle diameter of granules."

(2) Structure of Outercoat Layer

As shown in Fig. 4, multiple pores 22 are formed in the outercoat layer 20, which is a porous layer. The exhaust gas supplied into the inlet cells 12 passes through the pores 22 of the outercoat layer 20 and voids 18 of the partition 16 and is exhausted toward the outlet cells 14. At this time, the particulate matter PM in the exhaust gas is captured inside the outercoat layer 20. Specifically, the particulate matter PM exhausted from a commonly used internal combustion engine is so minute (the particle diameter of 300 nm or less) that it does not flow uniformly along the exhaust gas streamline, but oscillates irregularly due to Brownian diffusion. When the oscillating and flowing particulate matter PM comes into contact with the wall surfaces of the pores 22, it is captured on the wall surfaces of the pores 22.

The outercoat layer 20 in this embodiment is configured to suitably capture the particulate matter PM in consideration of the mechanism of capturing the particulate matter PM. The following describes a specific structure of the outercoat layer 20.

(a) $D_{90}$ Pore Diameter of Fine Pores in Outercoat Layer

The $D_{90}$ pore diameter of pores 22 in the outercoat layer 20 in this embodiment is from 1 $\mu$m to 10 $\mu$m inclusive. As mentioned above, the particulate matter PM entering the outercoat layer 20 flows in an oscillating manner due to Brownian diffusion. At this time, when the particulate matter PM comes into contact with the wall surfaces of the pores 22, it is captured on the wall surfaces of the pores 22. On the other hand, the pore diameter of the pores 22 is reduced, the effective area of the wall surfaces of the pores 22 becomes large. The particulate matter PM entering small pores 22 can come into contact with the wall surfaces of the pores 22 even when the amount of movement (oscillation width) due to Brownian diffusion is small. In view of these facts, a smaller pore diameter of pores 22 tends to improve the PM capturing performance. In addition, among multiple pores 22 formed in the outercoat layer 20, the pores 22 (large pores) with large pore diameters have low exhaust gas permeation resistance, thereby having a greater gas flow rate than that for the other pores. In this case, there is a high possibility that the particulate matter PM passes through the outercoat layer 20 without coming into contact with the wall surfaces of the pores 22, even if oscillation due to Brownian diffusion occurs. In view of these facts, in this embodiment, the $D_{90}$ pore diameter, which indicates the pore diameter of large pores, is set to 10 $\mu$m or less, rather than the average pore diameter or $D_{50}$ pore diameter, which is common parameters that define the pore diameter. It has been confirmed that this significantly reduces the amount of the particulate matter PM that passes through the outercoat layer 20, and the PM capturing performance is significantly improved. In view of further improving the PM capturing performance in the outercoat layer 20, the $D_{90}$ pore diameter of pores 22 is preferably 5 $\mu$m or less, more preferably 4.5 $\mu$m or less, yet more preferably 4 $\mu$m or less, particularly preferably 3.5 $\mu$m or less.

The $D_{90}$ pore diameter of pores 22 is a pore diameter of larger pores which are formed in a small number. Thus, even if the $D_{90}$ pore diameter of pores 22 is made small, the pressure drop does not increase as significantly as when the average pore diameter and the $D_{50}$ pore diameter are made small. However, if the $D_{90}$ pore diameter of the pores 22 is too small, the pressure drop may increase slightly during the deposition of PM. Thus, in the present embodiment, the $D_{90}$ pore diameter of the pores 22 is set to be 1 $\mu$m or more. In view of more suitably suppressing the pressure drop increase due to blocking of the pores, the $D_{90}$ pore diameter of the pores 22 is preferably 1.2 $\mu$m or more, more preferably 1.4 $\mu$m or more, yet more preferably 1.6 $\mu$m or more, particularly preferably 1.9 $\mu$m or more.

The "$D_{90}$ pore diameter of the pores in the outercoat layer" is measured according to the following procedure. First, two cubic test pieces (side length: 10 mm) are cut out from the particulate filter 1. Then, an air blow is performed on one of the test pieces, from the outlet cells 14 toward the inlet cells 12 (i.e., in the opposite direction to the exhaust gas flow direction D in Fig. 4). Next, the test piece after the air blow is ultrasonically washed in water (frequency: 45 kHz, cleaning time: 10 minutes). Thereafter, the test piece is dried and the air blow in the opposite direction to the exhaust gas flow direction D is performed again. Then, the above-mentioned peeling process is repeated until complete peeling of the outercoat layer 20 is confirmed by SEM observation. This makes it possible to obtain a sample of the partition 16 with the outercoat layer 20 peeled off (coat layer released sample).

Next, the mercury porosimetry is performed to obtain the pore diameter distribution of each of the coat layer released sample and the untreated test piece (coat layer remaining sample). Fig. 5 shows an example of the pore diameter distribution obtained. In Fig. 5, "A" is the pore diameter distribution of the coat layer released sample, and "B" is the pore diameter distribution of the coat layer remaining sample. As shown in Fig. 5, in the coat layer released sample A, a pore diameter peak $A_1$ is observed at a position of 10 $\mu$m or more (e.g., around 30 $\mu$m). In the coat layer remaining sample B, a pore diameter peak $B_3$ is also observed at the same position as the pore diameter peak $A_1$ of the coat layer released sample A. These pore diameter peaks $A_1$ and $B_3$ are understood to be derived from the voids 18 in the partition 16, which is a structure common to both the coat layer released sample A and the coat layer remaining sample B. Based on this, by excluding the pore diameter peak $B_3$ from the pore diameter distribution of the coat layer remaining sample B, the pore diameter distribution derived from the outercoat layer 20 can be obtained.

Next, in the pore diameter distribution of the coat layer remaining sample B, a pore diameter peak $B_1$ at 0.01 $\mu$m or more to less than 0.1 $\mu$m, and a pore diameter peak $B_2$ at 0.1 $\mu$m or more to less than 1 $\mu$m are confirmed. It is understood that of these peaks, the pore diameter peak $B_1$ on the small diameter side is very fine, so that it is derived from depressions (fine pores) of the granules. Based on this, by excluding the pore diameter peak $B_1$, it is possible to separate the pore diameter distribution (pore diameter peak $B_2$) derived from pores 22 in the outercoat layer 20. The "$D_{90}$ pore diameter of the pores" can then be measured by determining the pore diameter at which the cumulative volume is 90% when the total volume in the pore diameter distribution derived from the pores 22 is 100%.

(b) Thickness t1 of Outercoat Layer

The outercoat layer 20 in this embodiment has a thickness t1 of 20 $\mu$m or more. As mentioned above, when the particulate matter PM entering the pores 22 come into contact with the wall surfaces of the pores 22, it is captured on the wall surfaces of the pores 22. Increasing the passing distance of the particulate matter PM within the outercoat layer 20 may increase the opportunity for the particulate matter PM to come into contact with the wall surfaces of the pores 22. In light of this fact, in the present embodiment, the thickness t1 of the outercoat layer 20 is set to 20 $\mu$m or more. The thickness t1 of the outercoat layer 20 may be 25 $\mu$m or more, 28 $\mu$m or more, or 30 $\mu$m or more. In view of further improving the PM capturing performance in the outercoat layer 20, the thickness t1 of the outercoat layer 20 is preferably 33 $\mu$m or more, more preferably 35 $\mu$m or more, yet more preferably 38 $\mu$m or more, particularly preferably 43 $\mu$m or more.

On the other hand, if the thickness t1 of the outercoat layer 20 becomes too high, the air permeability of the outercoat layer 20 may decrease. Thus, in the present embodiment, the thickness t1 of the outercoat layer is set to be 80 $\mu$m or less. This allows suppression of the pressure drop increase due to the outercoat layer 20. In view of suitably suppressing the pressure drop increase, the thickness t1 of the outercoat layer is preferably 70 $\mu$m or less, more preferably 65 $\mu$m or less, yet more preferably 60 $\mu$m or less, particularly preferably 56 $\mu$m or less.

The "thickness t1 of the outercoat layer" is measured according to the following procedure. A particulate filter 1 to be tested is disassembled, and a test piece embedding a base material 10 in a resin is prepared. The test piece is cut to expose section of the partition 16. Then, the section of the partition 16 exposed is observed by a scanning electron microscope (SEM) to obtain a section SEM image (reflected electron image, observation magnification: $\times 200$). The section SEM image of the partition 16 is subjected to automatic binarization by using two-dimensional image analysis software (trade name: ImageJ (registered trademark)). This automatic binarization blackens the coat layers (the outercoat layer 20 and the inner coat layer 30, described below) and whitens the other structures (pores 22, partitions 16, voids 18). The images before and after the binarization are compared, and the coat layer (black portion) observed on the inlet surface 16a of the partition 16 is regarded as an "outercoat layer 20." Then, the thicknesses of the outercoat layer 20 at multiple locations (e.g., three locations) spaced 50 $\mu$m apart in the lateral direction of the processed image (e.g., the extending direction of the partition 16) are measured. The average value of the multiple measurement results is then used as the "thickness t1 of the outercoat layer."

(c) Porosity $P_{coat}$ of Outercoat Layer

The outercoat layer 20 in this embodiment has a porosity $P_{coat}$ of 30% or more. If the porosity $P_{coat}$ of the outercoat layer 20 becomes too low, the flow rate (linear velocity) of the exhaust gas passing through the pores 22 increases, and thus, the particulate matter PM highly likely passes through the outercoat layer 20. In the outercoat layer 20 with low porosity $P_{coat}$, the number of pores 22 formed is small, and has fewer pores 22 formed, and the effective area of the wall surfaces of the pores 22 that capture the particulate matter PM becomes narrow. Also in view of this fact, the PM capturing rate may decrease. If the porosity $P_{coat}$ of the outercoat layer 20 becomes too low, the pores 22 are more likely to be blocked by the deposition of the particulate matter PM. In the particulate filter 1 according to this embodiment, the porosity $P_{coat}$ of the outercoat layer 20 is set to 30% or more. This allows improvement in the PM capturing performance in the outercoat layer 20, and sudden pressure drop to be substantially prevented. In view of suitably enhancing both the PM capturing performance and the pressure drop suppression performance, the porosity $P_{coat}$ of the outercoat layer 20 is preferably 35% or more, more preferably 40% or more, particularly preferably 43% or more.

If the porosity $P_{coat}$ of the outercoat layer 20 is too high, the mechanical strength of the outercoat layer 20 decreases. This may result in damage or peeling off of the outercoat layer 20 when the exhaust gas flow rate suddenly increases. Thus, the porosity $P_{coat}$ of the outercoat layer 20 in the present embodiment is set to 70% or less. In view of forming the outercoat layer 20 having excellent mechanical strength, the porosity $P_{coat}$ of the outercoat layer 20 is preferably 65% or less, more preferably 60% or less, particularly preferably 55% or less.

The "porosity $P_{coat}$ of the outercoat layer" is measured by the cross-sectional SEM observation. Specifically, the section SEM image of the partition 16 is subjected to automatic binarization in the same manner as in the measurement means for the "treatment t1 of the outercoat layer." Then, a predetermined measurement region is arbitrary set in the binarized image of the outercoat layer 20 (black portion). This measurement region is a quadrangle region with one side of 100 $\mu$m in length along the lateral direction of the binarized image and the other side of the same length as the thickness t1 of the outercoat layer. Next, the "total area $AR_{all}$ of the measurement region" is obtained by counting the total number of pixels in the set measurement region. The "area $AR_{coat}$ of the outercoat layer" is obtained by counting the number of pixels of the outercoat layer 20 (black portion) in the measurement region. The "the total area $AR_{pore}$ of the pores" is obtained by determining the difference between the total area $AR_{all}$ of the measurement region and the area $AR_{coat}$ of the outercoat layer. The "porosity $P_{coat}$ of the outercoat layer" can be measured using the following equation (2) based on the total area $AR_{all}$ of the measurement region and the area $AR_{pore}$ of the pores.

$$P_{coat} (\%) = (AR_{pore}/AR_{all}) \times 100 \qquad (2)$$

(d) Conclusion

As described above, in the outercoat layer 20 according to this embodiment, the $D_{90}$ pore diameter of pores 22 is from 1 $\mu$m to 10 $\mu$m inclusive, the thickness t1 is from 20 $\mu$m to 80 $\mu$m inclusive, and the porosity $P_{coat}$ is from 30% to 70% inclusive. This allows the particulate matter PM to be appropriately captured inside the outercoat layer 20 (the wall surfaces of the pores 22). Furthermore, each of the above configurations is set so that a sudden increase in pressure drop does not occur. Thus, according to the particulate filter 1 disclosed herein, the PM capturing performance and the pressure drop suppression function can be both achieved at a high level.

(e) Other Structures

The $D_{50}$ pore diameter of pores 22 is preferably 1.8 $\mu$m or less, more preferably 1.75 $\mu$m or less, particularly preferably 1.7 $\mu$m or less. In addition to the $D_{90}$ pore diameter mentioned above, the PM collection performance inside the outercoat layer 20 can be further improved by keeping the upper limit of the $D_{50}$ pore diameter below a certain value. The $D_{50}$ pore diameter of pores 22 is preferably 0.5 $\mu$m or more, more preferably 0.7 $\mu$m or more, yet more preferably 1 $\mu$m or more, particularly preferably 1.3 $\mu$m or more. This more suitably prevent sudden increase in pressure drop due to blocking of the pores 22. The $D_{50}$ pore diameter of pores 22 is a pore diameter at the cumulative 50% in the pore diameter distribution of pores 22. The "pore diameter distribution of the pores 22" can be obtained by separating a pore diameter distribution (pore diameter peak $B_2$ in Fig. 5) derived from the pores 22 from a pore diameter distribution of the coat layer remaining sample B as in the measurement of the $D_{90}$ pore diameter.

The flow path length of the pores 22 in the outercoat layer 20 is preferably 200 $\mu$m or more, more preferably 300 $\mu$m, yet more preferably 400 $\mu$m or more, particularly preferably 430 $\mu$m or more. The "flow path length of the pores 22" herein refers to the total length of the pores 22 in the 100 $\mu$m measurement region along the extending direction X of the outercoat layer 20. As shown in Fig. 4, the pores 22 branch and meander inside the outercoat layer 20. Thus, the PM capturing performance inside the outercoat layer 20 can be further improved by increasing the flow path length of the pores 22 above a certain length. If the flow path length of the pores 22 is too long, the air permeability of the particulate filter 1 is greatly reduced. In light of this fact, the flow path length of the pores 22 is preferably 2000 $\mu$m or less, more preferably 1600 $\mu$m or less, particularly preferably 1400 $\mu$m or less. The "100 $\mu$m measurement region along the extending direction of the outercoat layer" can be calculated by the following equation (3).

$$\text{Flow path length} = \text{Area } AR_{pore} \text{ of pores}/((D_{50} \text{ pore diameter of pores}/2)^2 \times \pi \qquad (3)$$

The length of the outercoat layer 20 in the extending direction X of the partition 16 is preferably 85% or more, 90% or more, 95% or more, 97.5% or more with respect to the full length (100%) of the partition 16. This substantially prevents the particulate matter PM from passing through the portion where the outercoat layer 20 is not formed. The upper limit of the coat length of the outercoat layer 20 is not particularly limited, and may be 100% or less, 99.5% or less, 99% or less.

The coating amount of the outercoat layer 20 relative to the capacity of the base material 10 is preferably 10 g/L or more, more preferably 20 g/L or more, particularly preferably 30 g/L or more. This allows the outercoat layer 20 to be formed sufficiently and the PM capturing performance to be exhibited more suitably. If the coating amount of the outercoat layer 20 is too large, the pressure drop increase may occur due to the blocking of the inlet cells 12. In light of this fact, the coating amount of the outercoat layer 20 is preferably 100 g/L or less, more preferably 70 g/L or less, yet more preferably 50 g/L or less, particularly preferably 40 g/L or less.

B. Manufacturing Method of Particulate Filter

The manufacturing method of the particulate filter 1 according to the present embodiment will be described below. The manufacturing method includes a base material preparing step, a slurry applying step, and a firing step.

1. Base Material Preparing Step

In the base material preparing step, a wall-flow type base material 10 is prepared. The detailed structure of the base material 10 has already been described, and thus, a redundant description is omitted.

2. Slurry Applying Step

In the slurry applying step, an outercoat slurry is applied to the inlet surface 16a of the partition 16 of the base material 10. The outercoat slurry at least contains the granules, an organic pore forming material, and a dispersion medium. As the organic pore forming material, any powder made of resin which is burnt off in the firing step can be used without particular limitations. Examples of the organic pore forming material include cellulose, polyethylene, polypropylene, melamine resin, and polymethylmethacrylate resin (PMMA). When the outercoat slurry is fired, the outercoat layer 20 is sintered to form an outercoat layer 20, and the organic pore forming material is burnt off to form pores 22. For application of the outercoat slurry, a known application means can be used without particular limitations. For example, the outercoat slurry is supplied to the inlet cells 12 of the base material 10, and suction is then performed from the outlet cells 14. By controlling the suction speed, the outercoat slurry flows along the inlet cells 12, and the outercoat slurry is applied to the inlet surface 16a of the partition 16.

The $D_{90}$ pore diameter of the pores 22 in the outercoat layer 20 after firing is affected by the particle diameter and the aspect ratio of the organic pore forming material. For example, the $D_{50}$ particle diameter of the organic pore forming material can be set to 3 $\mu$m or more (suitably 4 $\mu$m or more, more suitably 5 $\mu$m or more). The upper limit of the $D_{50}$ particle diameter of the organic pore forming material can be set to 20 $\mu$m or less (suitably 15 $\mu$m or less, more suitably 10 $\mu$m or less). The aspect ratio of the organic pore forming material can be set to 1 or more (suitably 1.5 or more, more suitably 2 or more). The upper limit of the aspect ratio of the organic pore forming material can be set to 5 or less (suitably 4 or less, more suitably 3 or less). The $D_{90}$ pore diameter of the pores 22 is affected also by factors (such as the firing temperature, the gas generation amount during firing, and the dispersibility of the organic pore forming material) other than the particle diameter and the aspect ratio of the organic pore forming material. Thus, the particle diameter and the aspect ratio of the organic pore forming material do not limit the technology disclosed herein. The conditions for obtaining the desired $D_{90}$ particle diameter are preferably obtained by the preliminary examination of controlling various conditions including the particle diameter and the aspect ratio of the organic pore forming material.

The porosity $P_{coat}$ of the outercoat layer 20 after the firing is affected by the content of the organic pore forming material and the particle diameter of the granules. For example, the content of the organic pore forming material may be set to 10 wt% or more (suitably 20 wt% or more, more suitably 30 wt% or more) with respect to the total weight of the solid content (such as granules) in the slurry. The upper limit of the content of the organic pore forming material may be set to 60 wt% or less (suitably 55 wt% or less, more suitably 50 wt% or less). The $D_{50}$ particle diameter of the granules has already been described, and thus, a redundant description is omitted. The porosity $P_{coat}$ of the outercoat layer 20 may be changed by the factors (such as the firing temperature and the firing time) other than the organic pore forming material and the granules. Thus, the content of the organic pore forming material and the $D_{50}$ particle diameter of the granules also do not limit the technology disclosed herein. In other words, the conditions for obtaining the desired porosity $P_{coat}$ are preferably obtained by the preliminary examination of controlling various conditions including the content of organic pore forming material and the particle diameter of the granules.

The thickness t1 of the outercoat layer 20 after the firing is affected by the slurry viscosity and the supply amount. For example, the viscosity of the outercoat slurry may be set to 40 mPa·s or more (suitably 60 mPa·s or more, more suitably 80 mPa·s or more) in an E-type viscometer set at 100 rpm. The upper limit of the slurry viscosity is 300 mPa·s or less (suitably 200 mPa·s or less, more suitably 150 mPa·s or less). The outercoat slurry may contain a thickener for adjusting the viscosity. Examples of the thickener include cellulose-based polymers such as carboxymethyl cellulose (CMC), methyl cellulose (MC), hydroxypropyl methylcellulose (HPMC), and hydroxyethyl methylcellulose (HEMC). The slurry supply amount is set, as appropriate, according to the solid content percentage in the dispersion medium. For example, the slurry supply amount in the case where the solid content percentage of the slurry is about 16% may be set to 200 g/L or more (suitably 250 g/L or more, more suitably 300 g/L or more) relative to the capacity of the base material 10. The upper limit of the slurry supply amount may be set to 500 g/L or less (suitably 450 g/L or less, more suitably 400 g/L or less). The thickness t1 of the outercoat layer 20 may also vary depending on the factors (such as the suction speed and the suction time) other than the slurry viscosity and supply amount. Thus, the slurry viscosity and supply amount do not limit the technology disclosed herein. In other words, the conditions for obtaining the desired thickness t1 of the outercoat layer 20 are preferably obtained by the preliminary examination of controlling various conditions including the slurry viscosity and the supply amount.

In view of appropriately forming an outercoat layer on the surface of the partition 16, the $D_{50}$ pore diameter of granules in the slurry is preferably adjusted in consideration of the relationship with the $D_{50}$ particle diameter of voids 18 in the partition 16. Specifically, if the $D_{50}$ pore diameter of granules in the slurry relative to the $D_{50}$ pore diameter of voids 18 is too small, the granules enter the partition 16, making it difficult to form the outercoat layer 20 on the inlet surface 16a of the partition 16. If the $D_{50}$ particle diameter of the granules is too large, the number of contact points between the partition 16 and the granules (outercoat layer 20) becomes small, and the outercoat layer 20 is easily peeled off. Thus, it is preferable that when the $D_{50}$ pore diameter of the granules is "X," and the $D_{50}$ pore diameter of voids 18 is "Y," the following formula (1) is satisfied.

$$0.1 \leq X/Y \leq 3 \quad (1)$$

In view of more reliably preventing entering of the granules into the partition 16, the X/Y is preferably 0.5 or more, particularly preferably 1 or more. In view of more reliably preventing peeling off of the outercoat layer 20, the upper limit of the X/Y is preferably 2.5 or less or 2 or less. The control of the X/Y is an example of the means for forming a suitable outercoat layer 20 and does not limit the technology disclosed herein. For example, if the voids 18 in the partition 16 are filled with the organic solid content prior to the slurry supply, entering of the granules into the partition 16 can be substantially prevented even when the X/Y is much less than 0.1. The organic solid content filled in the voids 18 are then burned off in the firing step to be described later. By using such means, the outercoat layer 20 can be appropriately formed on the inlet surface 16a of the partition 16, even when very fine granules are used.

3. Firing Step

In the firing step, the base material 10 to which the outercoat slurry has been applied is fired. Thus, the granules are sintered to form the outercoat layer 20, and the organic pore forming material is burnt off to form pores 22. Accordingly, a particulate filter 1 according to the present embodiment can be manufactured.

The firing temperature in this step is preferably 400°C or more, more preferably 500°C or more, yet more preferably 600°C or more. Since the organic pore forming material can be appropriately burnt off, pores 22 with a desired structure can be reliably formed. In view of suppressing over-sintering of the granules, the firing temperature is preferably 1000°C or less, more preferably 900°C or less, yet more preferably 800°C or less. The firing time is preferably about 2 hours to about 4 hours.

[Second Embodiment]

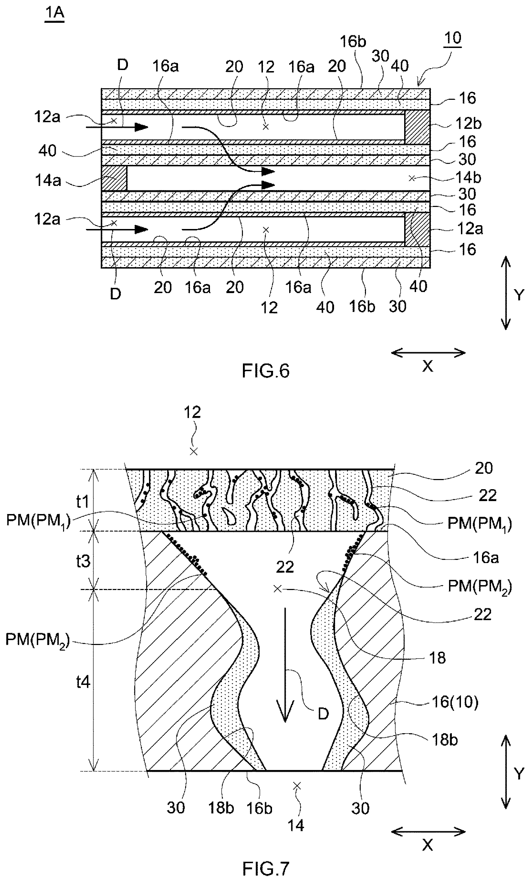

The particulate filter disclosed herein is not limited to the first embodiment, and various forms can be employed. A particulate filter according to the second embodiment will be described below. Fig. 6 is a schematic sectional view of the particulate filter according to the second embodiment along a cylinder axis direction. Fig. 7 is a schematic enlarged sectional view of a partition of the particulate filter according to the second embodiment.

A. Structure of Particulate Filter

As shown in Fig. 6, the particulate filter 1A according to the second embodiment is different from the particulate filter 1 (see Fig. 3) according to the first embodiment in that the particulate filter 1A includes an inner coat layer 30 and an uncoated region 40. Each component will be described below.

1. Inner Coat Layer

As shown in Figs. 6 and 7, the inner coat layer 30 is formed on the wall surfaces 18b of the voids 18 in a predetermined region from the surface (the outlet surface 16b) of the partition 16 in contact with the outlet cells 14 toward the inlet cells 12. The inner coat layer 30 contains a noble metal catalyst for purifying hazardous gas components in exhaust gas. Thus, the inner coat layer 30 functions as a catalyst layer for purifying hazardous gas components (such as HC, CO, and $NO_X$) contained in the exhaust gas. In this particulate filter 1A, the inlet surface 16a of the partition 16 is covered with the outercoat layer 20, and thus, most of the particulate matter PM in the exhaust gas is captured before reaching the inner coat layer 30. This allows suppression of a decrease in catalytic activity due to the adhesion of the particulate matter PM to the noble metal catalyst in the inner coat layer 30. Therefore, the particulate filter 1A according to the second embodiment can exhibit high exhaust gas purification performance.

For the granules forming the inner coat layer 30, the same type of heat resistant material as the outercoat layer 20 can be used. Further, the noble metal catalyst to be added to the inner coat layer 30 is not particularly limited, and known materials can be used without particular limitations. As in the outercoat layer 20, to the inner coat layer 30, various additives (such as an OSC material, a $NO_x$ adsorbent, and a stabilizing agent) may be added. The materials of these coat layers have already been described, and thus, a redundant description is omitted.

When the pore diameter distribution measured by the mercury porosimetry is measured for the particulate filter 1A, not only the pore diameter peaks ($B_1$ and $B_2$ in Fig. 5) derived from the outercoat layer 20 and the pore diameter peak ($B_3$ in Fig. 5) derived from the voids 18 in the partition 16 but also the pore diameter peak derived from the inner coating layer 30 are included. When the $D_{90}$ pore diameter of pores 22 is measured by such a pore diameter distribution, the following procedure is preferred.

First, multiple test pieces are cut out from the particulate filter 1A, and a peeling process of the outercoat layer 20 is performed on each of the test pieces. The procedure for the peeling process for the outercoat layer 20 has already been described, and thus, redundant description is omitted. Then, cross-sectional SEM observation is performed on the test pieces after the peeling process, and a test piece in which the outercoat layer 20 is peeled off and the inner coat layer 30 remains is selected. The selected test piece is hereinafter referred to as the "outercoat layer released sample." Then, the pore diameter distribution of the outercoat layer released sample and the pore diameter distribution of the test piece (coat layer remaining sample) which has not been subjected to the peeling process are obtained by the mercury porosimetry. In the pore size distribution of the coat layer remaining sample, a pore diameter peak derived from the outercoat layer 20 is confirmed. In the pore diameter distribution of the outercoat layer released sample, the pore diameter peak derived from the outercoat layer 20 disappears. Therefore, by comparing the two pore diameter distributions obtained, the pore diameter peak derived from the outercoat layer 20 can be identified. Then, the pore diameter peak derived from the outercoat layer 20 is separated from the pore diameter distribution of the coat layer remaining sample, and thus, the $D_{90}$ pore diameter of pores 22 in the outercoat layer 20 can be measured.

The granules of the inner coat layer 30 are preferably smaller than those of the outercoat layer 20. This allows the granules to be easily introduced into the voids 18, making it easier to form the inner coating layer 30. Specifically, the $D_{50}$ particle diameter of the granules in the inner coat layer 30 is preferably 2.0 $\mu$m or less, more preferably 1.5 $\mu$m or less, particularly preferably 1.0 $\mu$m or less.

The total amount of the noble metal catalyst in the particulate filter is the same as described in the first embodiment. When the inner coat layer 30 containing the noble metal catalyst is formed as in this embodiment, the content percentage of the noble metal catalyst in the inner coat layer 30 with respect to the total amount of the noble metal catalyst is preferably 20% or more (more suitably 40% or more, yet more suitably 60% or more). This allows more suitable exhaust gas purification performance to be exhibited. The upper limit of the content percentage of the noble metal catalyst in the inner coat layer 30 is not particularly limited, and may be 100% (the noble metal catalyst is present only in the inner coat layer 30). In view of imparting a certain level of the exhaust gas purification performance to the outercoat layer 20, the upper limit of the content percentage of the noble metal catalyst in the inner coat layer 30 is preferably 90% or less, more preferably 80% or less, particularly preferably 70% or less.

The coating amount of the inner coat layer 30 with respect to the capacity of the base material 10 is preferably 5 g/L or more, more preferably 10 g/L or more, particularly preferably 20 g/L or more. This allows the purifying performance for hazardous gas components to be further improved. If the coating amount of the inner coat layer 30 is too large, a pressure drop increase due to blocking of the voids 18 in the partition 16 is likely to occur. In light of this fact, the coating amount of the inner coat layer 30 is preferably 100 g/L or less, more preferably 70 g/L or less, particularly preferably 40 g/L or less.

A thickness t4 of the inner coat layer 30 in the thickness direction Y of the partition 16 is preferably 20 $\mu$m or more, more preferably 60 $\mu$m or more, particularly preferably 100 $\mu$m or more. This allows the purifying performance for hazardous gas components to be further improved. The upper limit of the thickness t4 of the inner coat layer 30 is preferably 190 $\mu$m or less, more preferably 170 $\mu$m or less, particularly preferably 150 $\mu$m or less. This suitably prevents the pressure drop increase due to blocking of the voids 18 in the partition 16.

2. Uncoated Region

In the particulate filter 1A according to the second embodiment, an uncoated region 40 in which the coat layer is not substantially present is provided between the outercoat layer 20 and the inner coat layer 30 in the thickness direction Y of the partition 16. In other words, the uncoated region 40 is provided in a region in contact with the inlet surface 16a inside the partition 16.

When the uncoated region 40 is formed, the hazardous gas component purifying performance in the inner coat layer 30 can be maintained at a high level. Specifically, also in the particulate filter 1A according to the present embodiment, an outercoat layer 20 having a $D_{90}$ pore diameter, a thickness t1, and a porosity $P_{coat}$ of the pores 22 which have been set appropriately is formed. This allows the particulate matter PM to be appropriately captured inside the outercoat layer 20 (the wall surfaces of the pores 22) (see Fig. 7). However, in the particulate matter PM in the exhaust gas, there are also particles that are not captured in the outercoat layer 20 and pass through the voids 18 in the partition 16 (hereinafter referred to as "pass-through particles PMt"). If the pass-through particles PMt reach the inner coat layer 30, the particulate matter PM is adhered to the noble metal catalyst, which may result in decrease of catalytic activity. However, in this embodiment, since an uncoated region 40 is provided between the outercoat layer 20 and the inner coat layer 30, the uncoated region 40 upstream of the inner coat layer 30 can capture the pass-through particles PMt. This allows suppression of the decrease in the exhaust gas purification performance in the inner coat layer 30. In addition, in the region where the inner coat layer 30 is formed, the voids 18 become narrower, so that the voids 18 may be blocked when a larger amount of pass-through particles PMt is deposited. In contrast, in the uncoated region 40, the voids 18 are maintained to be wider, making it difficult to cause a sudden pressure drop increase due to the deposition of the pass-through particles PMt.

The description "the coat layer and the catalyst layer are not substantially formed" herein indicates that the coat layer is not intentionally formed on the wall surfaces of the pores. Therefore, the case in which a trace amount of the coat layer is present in a region between the outercoat layer 20 and the inner coat layer 30 is encompassed in the concept that "the coat layer and the catalyst layer are not substantially formed." Whether or not an uncoated region is formed (i.e., whether or not an active coat layer is intentionally formed in the region between the outercoat layer and the inner coat layer) can be determined according to the processes described in "Determination of Each Region" below.

A thickness t3 of the uncoated region 40 in the thickness direction Y of the partition 16 is preferably 10 μm or more, more preferably 15 μm or more, particularly preferably 20 μm or more. This more suitably prevents the pass-through particles PMt from adhering to the inner coat layer 30. The upper limit of the thickness t3 of the uncoated region 40 is not particularly limited as long as the region in which the inner coat layer 30 is formed is secured, and may be 500 μm or less, 400 μm or less, 300 μm or less.

B. Manufacturing Method of Particulate Filter

An example of a method for manufacturing a particulate filter 1A according to the second embodiment will be described below. In this manufacturing method, a void filling step of filling the voids 18 in the partition 16 with an organic solid content is performed prior to the slurry applying step. Specifically, in the void filling step, a void filling slurry containing a predetermined organic solid content is introduced into the inlet cells 12 of the base material 10. Then, suction is performed from the outlet cells 14 of the base material 10. This allows the void filling slurry to permeate from the inlet cells 12 into the partition 16. By controlling the suction force, the length of the slurry penetration region in the thickness direction Y of the partition 16 can be controlled. A drying process is then performed, thereby filling, with an organic solid content, a region where the uncoated region 40 is planned to be formed.

Next, as in the first embodiment above, a slurry applying step of applying an outercoat slurry to the inlet surface 16a of the partition 16 is performed. Thereafter, the drying process is performed. Thus, a precursor of the outercoat layer 20 is formed on the inlet surface 16a of the partition 16. The drying process is performed at a temperature at which the dispersion medium in the outercoat slurry evaporates and the organic solid content filling the partition 16 is not burnt off.

Next, an inner slurry penetration step of penetrating the inner coat slurry from the outlet surface 16b of the partition 16 to the partition 16 is performed. The inner coat layer contains granules for forming the inner coat layer 30 and a dispersion medium for dispersing the granules. As mentioned above, the granules of the inner coat layer 20 contain the same type of heat resistant material as the outercoat layer 20 and a noble metal catalyst.

In the inner slurry penetration step, the inner coat slurry is supplied to the outlet cells 14 of the base material 10, and suction is performed from the inlet cells 12. This allows the inner coat slurry to penetrate into the partition 16 (voids 18) from the outlet cells 14. By performing the firing step in this state, an outercoat layer 20 is formed on the inlet surface 16a of the partition 16 and an inner coat layer 30 is formed within the partition 16. The organic solid content filling the partition 16 is burnt off during the firing step, so that a region filled with the organic solid content is an uncoated region 40. Thus, the particulate filter 1A including an outercoat layer 20, an inner coat layer 30, and an uncoated region 40 is manufactured.

As the organic solid content, any known materials can be used without particular limitations as long as they are burnt off by the firing step. Examples of the organic solid content include resin beads formed mainly of polyethylene, polypropylene, melamine resin, polymethyl methacrylate resin, or the like. Other examples thereof include resin fibers such as cellulose microfibers. The concentration of the organic solid content in the void filling slurry is preferably controlled, as appropriate, according to the porosity of the partition 16 in the base material 10 or the like. As the dispersion medium, any liquid material can be used without particular limitations as long as it does not dissolve the organic solid content. Examples of the dispersion medium include water and alcohol. The void filling slurry may contain a resin component (cellulose-based resin) which is soluble in this kind of dispersion medium or the like. The particle diameter of the organic solid content is preferably controlled so that the voids 18 in the partition 16 are suitably filled with the organic solid content. For example, when the resin beads are used as the organic solid content, the $D_{50}$ particle diameter of the resin beads is preferably smaller than the $D_{50}$ particle diameter of voids 18.

The method for manufacturing the particulate filter 1A according to the second embodiment is not limited to the method including the void filling step. For example, by controlling the supply amount of the inner coat slurry in the inner slurry penetration step, the uncoated region 40 can be formed without filling the voids 18 of the partition 16 with the organic solid content. Specifically, if the supply amount of the inner coat slurry is reduced and the suction force to suction the inlet cells 12 is weakened, the inner coat slurry does not reach the inlet surface 16a of the partition 16, and thus, an uncoated region 40 can be formed without the void filling step.

[Determination of Each Region]

The outercoat layer 20, the inner coat layer 30, and the uncoated region 40 can be specified by the following determination processes (a) to (k). In other words, whether or not the outercoat layer, the inner coat layer, the uncoated region, and the like are provided in the predetermined particulate filter can be determined by the following determination processes.

(a) A particulate filter to be tested is disassembled, and ten test pieces each embedding a partition of a base material in a resin are prepared.

(b) The test pieces are cut to expose sections of the partitions. Then, the sections of the partitions exposed are observed by a scanning electron microscope (SEM) to obtain section SEM observation images (reflected electron image, observation magnification: $\times 200$).

(c) The section SEM observation images are subjected to automatic binarization by using two-dimensional image analysis software (trade name: ImageJ (registered trademark)), to obtain binary images each showing only the coat layer.

(d) The images before and after the automatic binarization are compared, and the coat layer observed on the inlet surface of the partition is regarded as an "outercoat layer."

(e) The "total number of pixels in the coat layer" observed in each binarized image and the "number of pixels in the entire binarized image" observed in the binarized image were determined. A value obtained by dividing the "total number of pixels in the coat layer" by the "number of pixels in the entire binarized image" is calculated, and this value is regarded as a "coat layer abundance ratio in the entire partition."

(f) Images before and after the automatic binarization are compared, an arbitrary region from the outlet surface of the partition toward the inlet cells is set, a value obtained by dividing the "number of pixels in the coat layer in the set region" by the "total number of pixels in the set region" is calculated, and this is regarded as a "coat layer abundance ratio in the set region."

(g) A value obtained by dividing the "coat layer abundance ratio in the set region" by the "coat layer abundance ratio in the entire partition" is calculated, and whether or not the value is a first threshold value or more is determined. The first threshold value in this process is set to, for example, 1.05 (preferably 1.1, more preferably 1.15, yet more preferably 1.2, particularly preferably 1.25)

(h) The "arbitrary region from the outlet surface of the partition toward the inlet cells" described in (f) is expanded gradually toward the inlet cells, and the "coat layer abundance ratio in the set region" is calculated each time, and a value obtained by dividing the "coat layer abundance ratio in the set region" by the "coat layer abundance ratio in the entire partition" is calculated. The set region is expanded until this value falls below the first threshold value.

(i) If as a result of the process (h), a region in which the value falls below the first threshold value is identified, the region of the predetermined determination is regarded as the "inner coat layer." A region between the "outercoat layer" and the "inner coat layer" is regarded as a "third region."

(j) A value obtained by dividing "the number of pixels in the coat layer in the third region" by the "total number of pixels in the third region" is calculated, and this value is regarded as a "coat layer abundance ratio in the third region." (g) A value obtained by dividing the "coat layer abundance ratio in the third region" by the "coat layer abundance ratio in the entire image" is further calculated. If this value is a second threshold value or less, it is determined that the "third region" is the "uncoated region" (i.e., the uncoated region is provided between the outercoat layer and the inner coat layer). The second threshold value in this process is set to, for example, 0.65 (preferably 0.5, more preferably 0.4, yet more preferably 0.3, particularly preferably 0.25).

(k) The ten test pieces are subjected to processes (b) to (j), and if an uncoated region between the outercoat layer and the inner coat layer is observed in 50% of the test pieces, it is determined that the particulate filter to be tested is "provided with an uncoated region between the outercoat layer and the inner coat layer."

The "thicknesses t1 to t4 in the thickness direction Y" can be measured by the interfaces of the regions defined by the determination processes. Specifically, the "thicknesses (length in the thickness direction Y) t1 to t4" herein are each an average value of thicknesses of each region observed in the 10 test pieces.

[Test Examples]

Test examples regarding the technology disclosed herein will be described below. However, they are not intended that the technology disclosed herein is limited to such test examples.

In this test, seven particulate filters (samples 1 to 7) were prepared, and the influence of the structure of the outercoat layer on the PM capturing performance and the pressure drop suppression performance were determined.

1. Production of Test Samples

First, as a base material, a cylindrical honeycomb base material (made of cordierite, the number of cells: 300 cpsi, the thickness of the partition: 8 mill, the average pore diameter: 20 $\mu$m, the porosity: 63%) having a base material volumetric capacity of 1.4 L and a length of 101.6 mm was prepared.

Next, a mixture of 50% $Al_2O_3$ powder and 50% ZC composite oxide powder in a dispersion medium (water) was prepared. Then, a predetermined amount of organic pore forming material (cellulose particles) was added to the mixture, thereby preparing an outercoat slurry. Thereafter, the outercoat slurry is supplied to inlet cells of the base material at a coating amount of 40 g/L, and suction is performed from outlet cells. Then, a drying process (100°C, 30 minutes) was performed, thereby forming a dry film (precursor of the outercoat layer) on the inlet surface of the partition.

In this test example, the $D_{50}$ particle diameter of the organic pore forming material and the amount of the organic pore forming material added (the amount of the organic pore forming material with respect to 100 wt% of the total amount of the solid content other than the organic pore forming material) were different for samples 1 to 7. Table 1 shows the $D_{50}$ particle diameter of the organic pore forming material and the amount of the organic pore forming material added for each of the samples.

[Table 1]

| | Organic Pore Forming Material in Slurry | |
|---|---|---|
| | $D_{50}$ Particle Diameter ($\mu$m) | Additive (wt%) |
| Sample 1 | 6 | 30 |
| Sample 2 | 6 | 50 |
| Sample 3 | 10 | 30 |
| Sample 4 | 25 | 30 |
| Sample 5 | 6 | 15 |
| Sample 6 | 6 | 10 |
| Sample 7 | - | - |

Next, an inner coat slurry of 50% $Al_2O_3$ powder and 50% ZC composite oxide powder in a dispersion medium (water) was prepared. Thereafter, the inner coat slurry was supplied to outlet cells of the base material at a coating amount of 30 g/L, and suction was performed from inlet cells. Then, the drying process (100°C, 30 minutes) and the firing process (500°C, 60 minutes) were performed. Thus, particulate filters of samples 1 to 7 were produced. In each of the particulate filters, the outercoat layer is formed on the inlet surface of the partition, and the inner coat layer is formed inside the partition adjacent to the outlet surface.

2. Structure Analysis of Outercoat Layer

In this test, the structures of the outercoat layers of the samples 1 to 7 were analyzed. Specifically, five items including the $D_{90}$ pore diameter of pores, the thickness of the outercoat layer, the porosity of the outercoat layer, the $D_{50}$ pore diameter of pores, and the flow path length of pores were measured. The measurement of each of the items was performed according to the procedure described above. Table 2 shows the measurement results of the items.

3. Evaluation Test

(1) Evaluation of PM Capturing Performance

The particulate filter of each sample was installed in a soot generator (DPG, manufactured by Combustion), and diesel oil was burnt to supply exhaust gas containing the particulate matter to the particulate filter. In this test, the PM content (quantity) in the exhaust gas was measured on each of the upstream and downstream sides of the particulate filter. The ratio of the PM content on the upstream side to the PM content on the downstream side was then calculated as the PM capturing rate (%). In this evaluation, a 0.02 g/L particulate matter was supplied to the particulate filter, and then, measurement of the PM content was started. Table 2 shows the measurement results.

(2) Evaluation of Pressure Drop Suppression Function

In this test, the PM deposition pressure drop was measured while the PM capturing performance is evaluated. Specifically, the pressures of the particulate filter on the upstream side and the downstream side were measured while the PM content was measured. Then, a pressure drop was calculated by the difference between pressures on the upstream side and the downstream side. In this test, the pressure drop immediately after the start of measurement of the PM capturing rate (starting pressure drop) and a pressure drop after supply of the 1 g/L PM (PM deposition pressure drop) were measured. Table 2 shows the measurement results.

[Table 2]

| | | Structure Analysis of Outercoat Layer | | | | Results of Evaluation Test | | |
|---|---|---|---|---|---|---|---|---|
| | | $D_{90}$ Pore Diameter ($\mu$m) | Thickness ($\mu$m) | Porosity (%) | $D_{50}$ Pore Diameter ($\mu$m) | Flow Path Length ($\mu$m) | PM Capturing Rate (%) | Starting Pressure Drop (kPa) | PM Deposition Pressure Drop (Mbar) |
| Sample 1 | 2.3 | 38 | 44 | 1.3 | 450 | 96.9 | 5.8 | 53.4 |
| Sample 2 | 1.9 | 56 | 55 | 1.3 | 1400 | 98.6 | 5.8 | 54.7 |
| Sample 3 | 3.5 | 43 | 47 | 1.7 | 430 | 95.1 | 4.9 | 38.7 |
| Sample 4 | 13.1 | 62 | 59 | 1.9 | 430 | 74.5 | 5.5 | 45.7 |
| Sample 5 | 1.8 | 29 | 25 | 1.3 | 170 | 90.1 | 6.9 | 83.3 |
| Sample 6 | 1.7 | 25 | 23 | 1.3 | 120 | 83.8 | 7.3 | 101.4 |
| Sample 7 | 0.4 | 15 | 20 | 0.3 | 1550 | 86.4 | 9.2 | 161.3 |

As shown in Table 2, samples 1 to 3 had significantly improved PM capturing rates compared to sample 4. These results demonstrated that controlling the D90 pore diameter of pores in the outercoat layer to be a certain level or less significantly improved the PM capturing performance of the particulate filter. This is understood to be due to the reduction in large pores which have a larger gas flow rate and through which the particulate matter tends to pass. Furthermore, comparing samples 1 to 3 and sample 4, no significant differences in the starting pressure drop and PM deposition pressure drop were observed. This demonstrated that a smaller $D_{90}$ pore diameter significantly improved the PM capturing performance while not causing an excessive pressure drop increase.

Samples 1 to 3 had further improved PM capturing rate as compared with samples 5 to 7. This demonstrated that when an outercoat layer which was thick and had a high porosity was formed, the PM capturing performance and the pressure drop suppression performance could be achieved at a higher level. This is understood to be because gas flow paths in the outercoat layer are increased as the passing distance of the particulate matter inside the outercoat layer becomes long. Among samples 1 to 3, sample 2 had the most excellent PM capturing performance. This is expected because sample 2 has a longer pore flow path length in the outercoat layer.

From the test results above, it was demonstrated that both the PM capturing performance and the pressure drop suppression performance could be achieved at a high level by specifying the $D_{90}$ pore diameter of the pores, the thickness of the outercoat layer, and the porosity of the outercoat layer within appropriate ranges.

Although specific examples of the technology disclosed herein have been described in detail above, they are mere examples and do not limit the appended claims. The technology described in the appended claims include various modifications and changes of the foregoing specific examples.

Industrial applicability

The present invention can provide a particulate filter having both the PM capturing performance and the pressure drop suppression performance at a high level.

**Claims**

1. A particulate filter for capturing a particulate matter in exhaust gas exhausted from an internal combustion engine, the particulate filter comprising:

   a wall-flow type base material having an inlet cell with an opening only at an exhaust gas inlet end, an outlet cell with an opening only at an exhaust gas outlet end, and a porous partition partitioning the inlet cell and the outlet cell; and
   an outercoat layer that is a porous layer formed of multiple granules and is provided on a surface of the partition in contact with the inlet cell, wherein
   a $D_{90}$ pore diameter of pores in the outercoat layer in a volume-based pore diameter distribution measured by a mercury porosimetry is from 1 $\mu$m to 10 $\mu$m inclusive, and
   in a cross-sectional SEM observation, the outercoat layer has a thickness from 20 $\mu$m to 80 $\mu$m inclusive, and a porosity from 30% to 70% inclusive.

2. The particulate filter according to claim 1, wherein a flow path length of the pores of the outercoat layer is 200 $\mu$m or more, in a 100 $\mu$m measurement region along an extending direction.

3. The particulate filter according to claim 1 or 2, wherein a $D_{50}$ pore diameter of the outercoat layer in a volume-based pore distribution measured by the mercury porosimetry is from 0.8 $\mu$m to 3 $\mu$m inclusive.

4. The particulate filter according to any one of claims 1 to 3, wherein when a $D_{50}$ pore diameter of the granules in the outercoat layer in a number-based particle size distribution measured by a laser diffraction light scattering method is X, and a $D_{50}$ pore diameter of voids in the partition in a volume-based pore diameter distribution measured by the mercury porosimetry is Y, the particulate filter satisfies the following formula (1):

$$0.1 \leq X/Y \leq 3 \quad (1)$$

5. The particulate filter according to any one of claims 1 to 4, wherein the granules contain at least one selected from the group consisting of alumina, ceria, zirconia, silica, magnesia, and calcia.

6. The particulate filter according to any one of claims 1 to 5, wherein the granules contain a noble metal catalyst for purifying a hazardous gas component in the exhaust gas.

7. The particulate filter according to any one of claims 1 to 6, further comprising an inner coat layer that is formed on wall surfaces of voids in a region extending from a surface of the partition in contact with the outlet cell to the inlet cell, and the inner coat contains a noble metal catalyst for purifying the hazardous gas component in the exhaust gas.

8. The particulate filter according to claim 7, wherein an uncoated region in which a coat layer is substantially not present between the outercoat layer and the inner coat layer in a thickness direction of the partition.

9. The particulate filter according to claim 8, wherein a thickness of the uncoated region in the thickness direction of the partition is 10 $\mu$m or more.

10. The particulate filter according to any one of claims 1 to 9, wherein the internal combustion engine is a gasoline engine.

FIG.1

FIG.2

1

FIG.3

FIG.4

FIG.5

FIG.6

FIG.7

# EP 4 571 062 A1

## INTERNATIONAL SEARCH REPORT

International application No.

**PCT/JP2023/026603**

### A. CLASSIFICATION OF SUBJECT MATTER

***F01N 3/022***(2006.01)i; ***B01D 39/20***(2006.01)i; ***B01D 53/94***(2006.01)i; ***B01J 35/04***(2006.01)i; ***B01J 35/10***(2006.01)i; ***F01N 3/035***(2006.01)i

FI: F01N3/022 Z; B01J35/04 301E; B01D53/94 222; B01D53/94 245; B01D53/94 280; F01N3/035 A; B01J35/10 301F; B01D39/20 D ZAB

According to International Patent Classification (IPC) or to both national classification and IPC

### B. FIELDS SEARCHED

Minimum documentation searched (classification system followed by classification symbols)

F01N3/022; B01D39/20; B01D53/94; B01J35/04; B01J35/10; F01N3/035

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2022-115873 A (N.E. CHEMCAT CORP.) 09 August 2022 (2022-08-09) paragraphs [0020]-[0071], fig. 1-3 | 1-10 |
| A | US 2021/0094885 A1 (CORNING INC.) 01 April 2021 (2021-04-01) entire text, all drawings | 1-10 |

☐ Further documents are listed in the continuation of Box C.　　☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **29 September 2023** | **10 October 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

22

## INTERNATIONAL SEARCH REPORT
### Information on patent family members

International application No.

**PCT/JP2023/026603**

| Patent document cited in search report | | | Publication date (day/month/year) | Patent family member(s) | Publication date (day/month/year) |
|---|---|---|---|---|---|
| JP | 2022-115873 | A | 09 August 2022 | CN 112236231 A paragraphs [0055]-[0123], fig. 1-3 | |
| US | 2021/0094885 | A1 | 01 April 2021 | (Family: none) | |

**REFERENCES CITED IN THE DESCRIPTION**

**Patent documents cited in the description**

- JP 2022141708 A
- JP 2012518753 A